# EUROPÄISCHE PATENTSCHRIFT

(11) **EP 1 525 408 B1**
(45) Veröffentlichungstag und Bekanntmachung des Hinweises auf die Patenterteilung: **30.09.2009**
(21) Anmeldenummer: 03764898.7
(22) Anmeldetag: 17.07.2003
(51) Int. Cl.: F16D 48/06

(54) **HYDRAULISCHES BETÄTIGUNGSSYSTEM**
HYDRAULIC ACTUATION SYSTEM
SYSTEME D'ACTIONNEMENT HYDRAULIQUE

(30) Priorität: 18.07.2002 DE 10232499
(43) Veröffentlichungstag der Anmeldung: 27.04.2005
(73) Patentinhaber: LuK Lamellen und Kupplungsbau Beteiligungs KG, 77815 Bühl (DE)
(72) Erfinder: WELTER, Roland, 77815 Bühl (DE); ZINK, Matthias, 7783 Ottenhöfen (DE); HAHN, Henry, 77815 Bühl (DE); POPP, Udo, 77815 Bühl (DE); HAUSNER, Markus, 76135 Karlsruhe (DE)
(86) Internationale Anmeldenummer: PCT/DE2003/002390
(87) Internationale Veröffentlichungsnummer: WO 2004/010017

(56) Entgegenhaltungen:
- EP-A- 0 937 903
- DE-A- 3 736 584
- DE-A- 4 121 016
- DE-A- 4 140 328
- DE-A- 4 142 744
- DE-A1- 19 812 254
- FR-A- 2 283 380
- PATENT ABSTRACTS OF JAPAN Bd. 007, Nr. 261 (M-257), 19. November 1983 (1983-11-19) & JP 58 142035 A (NIPPON AIR BRAKE KK), 23. August 1983 (1983-08-23)

## Beschreibung

Die Erfindung betrifft ein hydraulisches Kupplungssystem, insbesondere zur Betätigung einer Fahrzeugkupplung.

Hydraulische Betätigungssysteme mit einer beispielsweise von einem Pedal her mit einem Fuß bedienten Geberzylindereinheit, die über eine Druckmittelleitung mit einer Nehmerzylindereinheit verbunden ist, welche eine Baugruppe, wie eine Fahrzeugkupplung, ein Getriebe, eine Bremse usw. betätigt, finden vielfältigen Einsatz. Solche Betätigungssysteme, insbesondere Betätigungssysteme zur Betätigung einer Fahrzeugkupplung, sollen eine sichere und komfortable Betätigung der jeweiligen Baugruppe ermöglichen.

Ein Problem, das sich bei der hydraulischen Betätigung von Fahrzeugkupplungen stellt, ist, dass der Motor abgewürgt wird, wenn ein Kupplungspedal zum Einkuppeln zu rasch betätigt wird.

In der DE 41 42 744 A1 ist eine Lösung für diese Problematik offenbart. Hierbei wird das schlagartige Freigeben des Kupplungspedals, das zu Beschädigungen an Triebstrangteilen führt, dadurch vermieden, indem in der Leitungsverbindung zwischen Geberzylinder und Nehmerzylinder eine Sicherheitseinrichtung angeordnet ist, die eine Drosselstelle aufweist. An dieser Drosselstelle wird zunächst die Kupplungsgeschwindigkeit erfasst und nachfolgend der Fluidstrom zwischen Nehmerzylinder und Geberzylinder so gedrosselt, dass der Druckabfall innerhalb eines definierten Bereiches einer Druck-Zeit-Kennlinie liegt. Diese Drosselstelle besteht dabei im Wesentlichen aus einer einen bestimmten Durchmesser aufweisenden, je nach Bedarf, schließbaren Messblende.

Der Erfindung liegt die Aufgabe zugrunde, ein hydraulisches Betätigungssystem, insbesondere zur Betätigung einer Fahrzeugkupplung zu schaffen, das eine wohldosierte Betätigung zulässt.

Diese Aufgabe wird mit einem hydraulischen Betätigungssystem mit den Merkmalen des Anspruchs 1 gelöst. Mit dem erfindungsgemäßen Betätigungssystem erfasst der Sensor in vorteilhafter Weise die Motordrehzahl und steuert das Steuergerät den Aktor zum Einstellen der Leistung einer Brennkraftmaschine des Kraftfahrzeugs in Richtung einer Leistungsvergrößerung an, wenn der Motordrehzahlverlauf bei schließender Kupplung vorbestimmte Grenzwerte übersteigt. Damit wird das Risiko des Abwürgens des Motors bzw. der Brennkraftmaschine vermindert.

Vorteilhafter Weise ist das Steuergerät mit weiteren Sensoren zur Erfassung einer Drehzahl eines Fahrzeugrades und/oder eine Getriebeübersetzung verbunden, so dass der Durchströmquerschnitt der Hydraulikstrecke des Betätigungssystems entsprechend den jeweiligen Betriebsbedingungen optimal an die jeweiligen Erfordernisse angepasst werden kann.

Bei einer abgeänderten Ausführungsform eines erfindungsgemäßen Betätigungssystems ist ein Ventilglied des Drosselventils verschiebbar in einer Bohrung angeordnet, die etwa rechtwinklig zu einer im Arbeitsraum einer der Zylindereinheiten führenden Verbindungsbohrung verläuft und derart ausgebildet und mit Wänden der Bohrung derart zusammenwirkt, dass es von einer Hydraulikmittelströmung zwischen den beiden Zylindereinheiten in die eine oder die andere Richtung gegen einen Anschlag bewegt wird, wobei bei an dem Anschlag anliegendem Ventilglied ein von ihm freigebender
Strömungsquerschnitt verkleinert ist. Mit der vorgenannten Ausbildung des Drosselventils wird nicht nur der axiale Bauraum der zugehörigen Zylindereinheit durch das Drosselventil nur minimal vergrößert, sondern wird auch eine einfache Ausbildung bei hoher Zuverlässigkeit erzielt.

Vorteilhaft ist das Ventil insgesamt rohrförmig mit einem axialen Durchgangskanal ausgebildet und derart beweglich angeordnet, dass aus dem zugehörigen Arbeitsraum rausströmendes Hydraulikmittel durch den Durchgangskanal hindurchströmt und in den zugehörigen Arbeitsraum hineinströmendes Hydraulikmittel das Ventilglied mit einer Stirnfläche in Anlage an eine die Bohrung verschließende Wand bewegt, so dass der Durchgangskanal zumindest teilweise verschlossen ist und die Hydraulikmittelströmung durch einen radialen Durchlass in der Wand des Durchlasskanals erfolgt.

Bei einer Weiterbildung des vorgenannten Drosselventils ist die das Ventilglied aufnehmende Bohrung im Gehäuse der zugehörigen Zylindereinheit ausgebildet und die Druckmittelleitung an die Bohrung angeschlossen.

Vorteilhaft ist das Drosselventil dem Geberzylinder eines hydraulischen Kupplungsbetätigungssystems eines Kraftfahrzeugs zugeordnet und vermindert bei einer in den Geberzylinder hinein erfolgenden Hydraulikströmung den Strömungsquerschnitt.

Die Erfindung, die für weitgehend alle Arten der hydraulischen Betätigungssysteme, insbesondere solchen zur Betätigung einer Fahrzeugkupplung, verwendet werden kann, wird im Folgenden anhand schematischer Zeichnungen beispielsweise und in weiteren Einzelheiten erläutert.

Es stellen dar:
- Fig. 1: ein Schema eines erfindungsgemäßen hydraulischen Betätigungssys- tems einer Fahrzeugkupplung,
- Fig. 2 und 3: Schnittansichten eines Drosselventils in zwei unterschiedlichen Stellun- gen des Ventilgliedes,
- Fig. 4 und 5: Schnittansichten einer weiteren Ausführungsform eines Drosselventils mit zwei unterschiedlichen Stellungen des Ventilglieds,
- Fig. 6: einen Axialschnitt durch eine Verbindungsvorrichtung,
- Fig. 7: eine perspektivische Ansicht der Vorrichtung gemäß Fig. 6 und
- Fig. 8: einen Längsschnitt eines Rohrs mit durch Stauchung gebildetem An- schlag.

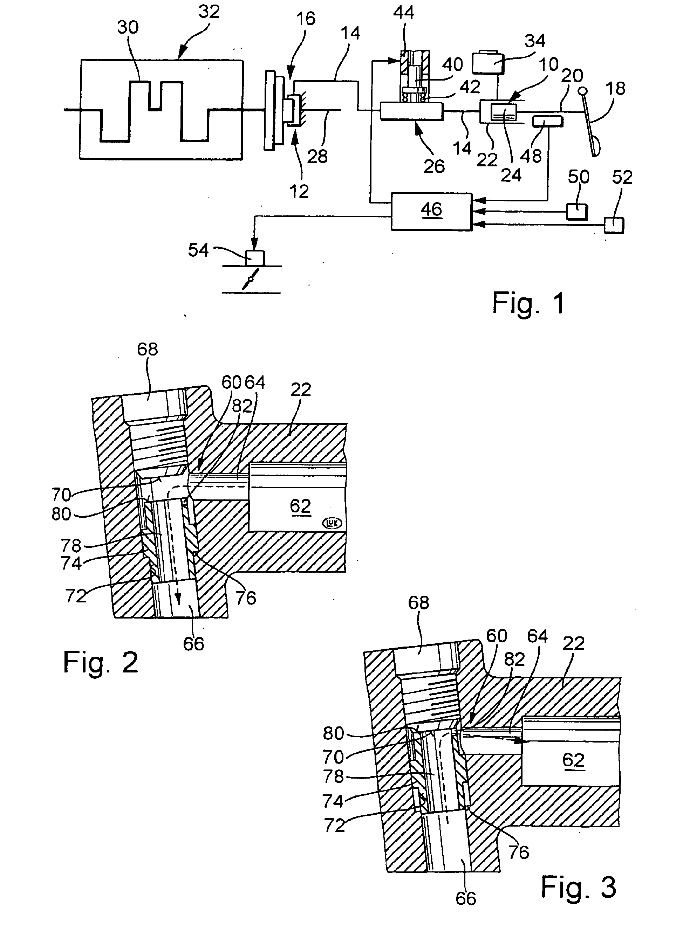

Gemäß Fig. 1 enthält ein hydraulisches Betätigungssystem für eine Kupplung eine Geberzylindereinheit 10, die mit einer Nehmerzylindereinheit 12 über eine Hydraulikmittelleitung 14 verbunden ist. Eine Kupplung 16 wird hydraulisch durch Beaufschlagung der Geberzylindereinheit 10 mittels eines Betätigungsgliedes 18, dass ein Fußpedal, ein Aktor, beispielsweise ein elektrischer Aktor oder dergleichen sein kann, betätigt. Durch Betätigung des Betätigungsgliedes 18 wird über eine Kolbenstange 20 ein im Zylinder 22 der Geberzylindereinheit 10 beweglicher Kolben 24 gemäß Fig. 1 nach links verschoben, so dass im Zylinder 22 Druck aufgebaut wird, der über die Hydraulikmittelleitung 14 durch ein Drosselventil 26 hindurch der Nehmerzylindereinheit 12 zugeführt wird. Der Nehmerzylinder 12 ist, wie dargestellt, vorteilhafter Weise konzentrisch um eine Getriebeeingangswelle 28 herum angeordnet und stützt sich axial an einem nicht dargestellten Getriebegehäuse ab, um die nötige Ausrückkraft über ein Ausrücklager der Kupplung 16 bzw. an deren Ausrückelementen, wie Tellerfeder usw., in an sich bekannter Weise aufzubringen.

Die Getriebeeingangswelle 28 überträgt bei geschlossener, konzentrisch zu einer Kurbelwelle 30 einer Brennkraftmaschine 32 angeordneter Kupplung 16 das Drehmoment der Brennkraftmaschine 32 auf ein nicht dargestelltes Getriebe und von dort auf die Antriebsräder eines Kraftfahrzeugs.

Zur Bevorratung des Druckmittels dient in an sich bekannter Weise ein Druckmittelreservoir 34, das mit dem Geberzylinder 10 vorzugsweise dann verbunden ist, wenn sich dieser in Ruhestellung befindet, d.h., auf den Nehmerzylinder 12 kein Druck ausgeübt wird. In dieser Stellung kann Druckmittel in die Geberzylindereinheit 10 nachfließen. Bei Betätigung der Geberzylindereinheit 10 wird über ein nicht dargestelltes Ventil (z. B. Überfahren einer Schnüffelbohrung) das Druckmittelreservoir 34 von der Geberzylindereinheit 10 getrennt.

Das Drosselventil 26 enthält ein Ventilglied 40, das von einer Feder 42 in Offenstellung gedrängt wird und einen Schaft aufweist, der als Anker für einen Elektromagnet 44 dient. Der Elektromagnet 44 wird von einem Steuergerät 46 angesteuert, dessen Eingänge mit einem Sensor 48 zum Erfassen der Motordrehzahl der Kolbenstange 20 bzw. des Betätigungsgliedes 18, einem Sensor 48 zur Erfassung der Drehzahl eines nicht dargestellten Fahrzeugrades und einem Sensor 52 zur Erfassung des Gangs bzw. der Übersetzung eines nicht dargestellten Getriebes verbunden sind. Ein weiterer Ausgang des Steuergerätes 46 ist mit einem Aktor 54 zur Betätigung eines Leistungsstellgliedes der Brennkraftmaschine 32, beispielsweise einer Drosselklappe, verbunden.

Die Funktion des elektronisch angesteuerten Drosselventils 26 ist Folgende:
Während des Schließvorganges der Kupplung wird die Motordrehzahl erfasst. Unterschreitet die Motordrehzahl eine von der Abfallgeschwindigkeit der Motordrehzahl abhängige Grenzdrehzahl, wird der Elektromagnet 44 mit Strom beaufschlagt, so dass sich das Ventilglied 40 in einen durch ein Gehäuse des Drosselventils 26 gebildeten Strömungsquerschnitt hineinbewegt und diesen verkleinert.

Der Hydraulikmitteldurchfluss durch die Leitung 14 wird auf diese Weise verringert, so dass die Kupplung 16 langsamer einkuppelt, wodurch die Gefahr des Abwürgens der Brennkraftmaschine 32 vermindert wird.

Der Aktor 54 ist optional. Bei dessen Vorhandensein wird vorteilhafter Weise gleichzeitig mit dem zunehmenden Schließen des Drosselventils 26 das Leistungsstellorgan geöffnet, so dass die Motordrehzahl angehoben wird. Dadurch wird einem Abwürgen zusätzlich entgegengewirkt. Die Öffnungsgeschwindigkeit des Leistungsstellorgans ist beispielsweise proportional zur Schließ- bzw. Einkuppelgeschwindigkeit der Kupplung.

Die Sensoren 50 und 52 sind ebenfalls optional. Durch Erfassung der Raddrehzahl und der Gangstellung kann das Drosselventil je nach Betriebssituation bedarfsgerecht betätigt werden, beispielsweise kann der Durchströmquerschnitt der Leitung 14 beim Anfahren im ersten Gang über längere Zeit begrenzt werden als bei einer Schaltung zwischen anderen Gängen, wobei das Ausmaß der Drosselung bzw. Querschnittsverminderung zusätzlich von der Fahrgeschwindigkeit abhängen kann.

Für das Drosselventil sind verschiedene Steuerstrategien denkbar, beispielsweise eine Wegsteuerung als Proportionalventil oder ein Pulsen des Elektromagneten mit unterschiedlicher Frequenz oder eine Zweipunktsteuerung mit lediglich AUF/ZU. Für die Wegmessung an der Geberzylindereinheit 10 sind ebenfalls unterschiedliche Strategien denkbar, beispielsweise eine kontinuierliche Wegmessung, mit der gleichzeitig der derzeit übliche Bremslichtschalter ersetzt werden kann und die Signale für eine Vernetzung mit der Motorsteuerung zur Fahrkomfortverbesserung verwendet werden können. In einfacher Form genügt eine Zwei- oder Dreipunktmessung, wie sie heute bei Pedalschaltern oder an der Geberzylindereinheit realisiert ist.

Das beschriebene aktive Drosselventil 26, dessen Aufbau und Betätigung unterschiedlichster Art sein können (Hubventil, Drehventil usw.), bietet Vorteile nicht nur beim Anfahren bzw. Vermeiden von Abwürgen des Motors, sondern es kann auch beim Schalten zwischen höheren Gängen vorteilhaft verwendet werden.

Eine weitere vorteilhafte Anwendung des aktiven Drosselventils besteht darin, Rückkopplungen zwischen Motor und Kupplungspedal zu unterdrücken, wie sie beispielsweise durch Motorschwingungen bedingt sind. Übermäßig hoher Druck in der Hydraulikmittelleitung 14 gemäß Fig. 1 links vom Drosselventil 26, wie er durch Schwingungen induziert werden kann, kann mittels eines nicht dargestellten Drucksensors erfasst werden und in eine Drosslung des Durchströmquerschnitts umgesetzt werden.

Die Figuren 2 und 3 zeigen Querschnitte eines passiven Drosselventils 60, dessen Ventilglied in zwei unterschiedlichen Stellungen ist. Dargestellt ist ein Axialquerschnitt durch einen Teil des Geberzylinders 22. Von dem Arbeitsraum 62 des Geberzylinders 22 führt eine Verbindungsbohrung 64 in eine weitere Bohrung 66, die etwa quer zur Verbindungsbohrung 64 in dem Gehäuse des Zylinders 22 ausgebildet ist und gemäß Fig. 2 von oben her durch einen Stopfen 68 fluiddicht verschlossen ist. Der Stopfen 68, der beispielsweise in die Bohrung 66 eingeschraubt sein kann, hat eine mit der Oberseite der Verbindungsbohrung 64 etwa bündig verlaufende Stirnfläche 70. In der Bohrung 66 ist ein rohr- bzw. hülsenförmiges Ventilglied 72 mittels eines Bundes 74 beweglich geführt.

Fig. 2 zeigt die voll geöffnete Stellung des Drosselventils 60, die das Ventilglied 72 annimmt, wenn Hydraulikmittel aus dem Arbeitsraum 62 in die Bohrung 66 strömt, an die gemäß Fig. 2 unten die Hydrjulikmittelleitung 14 (Fig. 1 angeschlossen ist). In der voll geöffneten Stellung liegt der Bund 74 an einer Stufe 76 der Bohrung 66 an, so dass die Öffnungsbewegung des Ventilgliedes 72 begrenzt ist. Es versteht sich, dass das Ventilglied 72 an seiner Außenseite unterhalb des Bundes 74 und/oder die Bohrung 66 unterhalb der Stufe 76 verrippt ist, so dass zwischen dem Bund und der Stufe befindliches Hydraulikmittel entweichen kann. Wie ersichtlich, ist in der Öffnungsstellung des Ventilgliedes 72 der gesamte Querschnitt eines durch das Ventilglied 72 führenden Durchgangskanals 78 freigegeben.

Bei Umkehr der Strömungsmittelrichtung, d.h. Strömung aus der Bohrung 66 in den Arbeitsraum 62 hinein, bewegt sich das Ventilglied 72 aus der Stellung gemäß Fig. 2 in die Stellung gemäß Fig. 3, in der es mit seiner oberen, ringförmigen Stirnfläche 80 an der Stirnfläche 70 des Stopfens 68 anliegt. Für den Durchtritt von Strömungsmittel durch den Durchgangskanal 78 steht dann nur noch ein kleiner Strömungsquerschnitt zur Verfügung, der durch eine oder mehrere am Oberrand des Ventilglieds 72 ausgebildete Ausnehmungen 82 gebildet ist. Es versteht sich, dass die Ausnehmung oder die Ausnehmungen 82 nicht unmittelbar am Oberrand des Ventilgliedes 72 ausgebildet sein müssen, sondern auch in Form einer oder mehrerer radialer Bohrungen oberhalb des Bundes 74 ausgebildet sein können.

Die Funktion des Drosselventils 60 gemäß den Figuren 2 und 3 ist insgesamt ähnlich der des Drosselventils 26 gemäß Fig. 1 mit dem Unterschied, dass das Drosselventil 60 passiv arbeitet.. Wenn Strömungsmittel rasch in den Arbeitsraum 62 strömt, beispielsweise beim Einkuppeln der Kupplung, bewegt sich das Ventilglied 72 in seine obere Anschlagstellung und vermindert den Durchströmquerschnitt bis zu einem durch die Ausnehmung 82 definierten Minimum. Auf diese Weise ist das dynamische Drehmoment, das der Motor insbesondere beim Anfahren mit rasch Losgelassenem Kupplungspedal aufbringen muss, begrenzt.

Es versteht sich, dass unterschiedlichste Ausbildungen des durch die Druckmittelströmung bzw. den Druck des Druckmittels bewegten Ventilglieds 72 bzw. Drosselventils 60 möglich sind. Beispielsweise kann das Ventilglied 72 mehrere axiale Durchströmkanäle enthalten, die in der Stellung gemäß Fig. 2 alle offen sind und von denen in der Stellung gemäß Fig. 3 zumindest einige geschlossen sind. Zur Vorspannung des Ventilglieds in eine seiner Endstellungen kann zusätzlich eine Feder vorgesehen sein.

Die Ausbildung des in das Gehäuse des Zylinders 22 integrierten Drosselventils 60 ist außerordentlich kompakt und einfach und verlängert den Zylinder 22 in dessen axialer Richtung nur minimal um den Durchmesser der Bohrung 66.

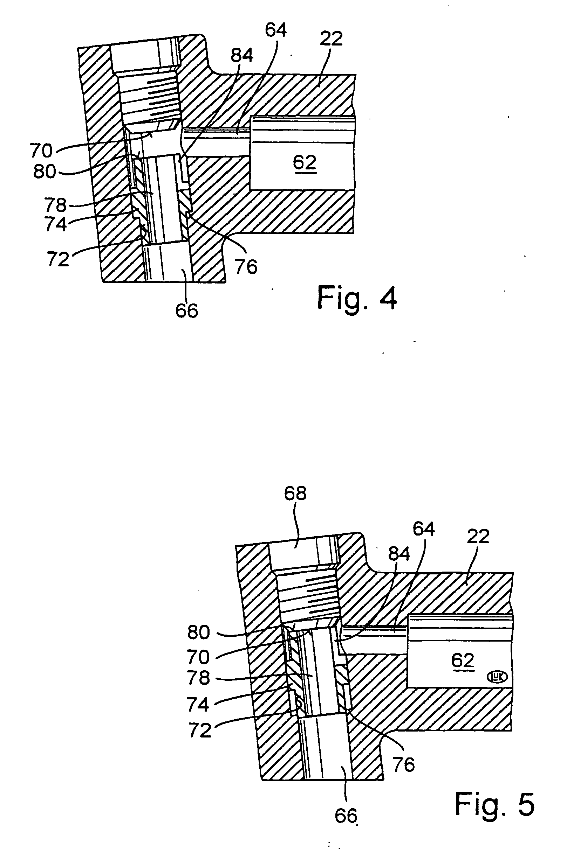

Figuren 4 und 5, die weitgehend den Figuren 2 und 3 entsprechen, zeigen eine abgeänderte Ausführungsform eines Ventilgliedes. Der Bund 74 des Ventilgliedes 72 ist axial länger als bei der Ausführungsform gemäß Figuren 2 und 3 und enthält in der Nähe seines oberen Randes ein oder mehrere radiale Löcher 84. In der Schließstellung gemäß Fig. 4 des Ventilglieds 72 sind die radialen Löcher 84 durch die Wandung der Bohrung 66 verdeckt und ist der gesamte Durchgangskanal 78 des Verbindungsgliedes 72 für eine Durchströmung frei, wohingegen in der Schließstellung gemäß Fig. 5 das oder die Löcher 84 zu der Verbindungsbohrung 64 hin frei sind und der Durchgangskanal 78 nach oben durch Anlage der Stirnflächen 70 und 80 verschlossen ist.

Hydraulische Betätigungssysteme der beschriebenen Art werden in großen Stückzahlen eingesetzt, für die eine kostengünstige und funktionssichere Verbindung zwischen der Hydraulikmittelleitung 14 und den Zylindereinheiten 10 und 12 wichtig ist.

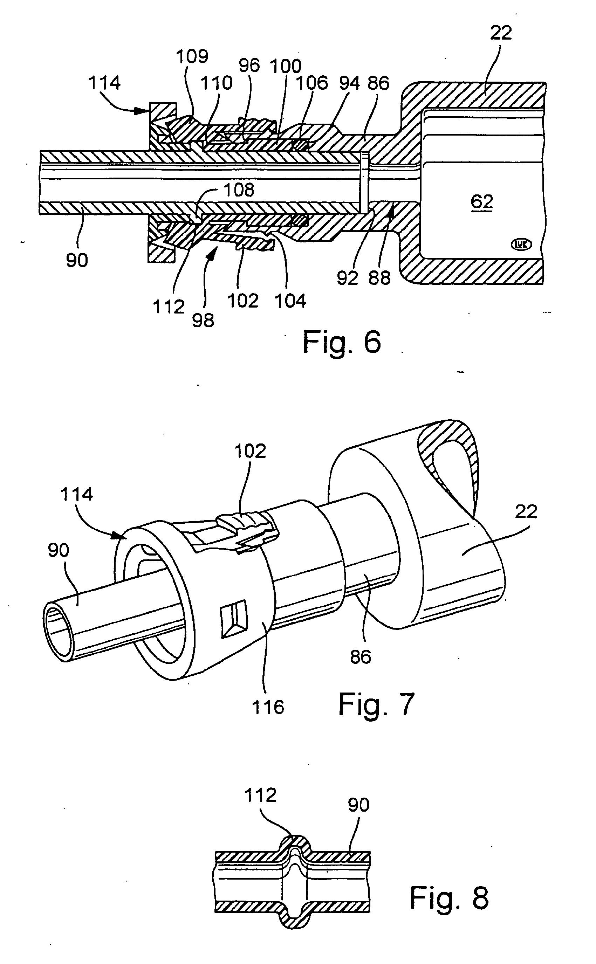

Die Figuren 6 und 7 stellen eine solche Verbindung im Axialschnitt bzw. perspektivischer Darstellung dar.

Der Zylinder 22 bzw. dessen Gehäuse endet in einem zylindrischen Ansatz 86, in dem ein Einschubkanal 88 zum Einschieben der als Rohr 90 endenden Hydraulikmittelleitung 14 (Fig. 1) ausgebildet ist. Der mit dem Arbeitsraum 62 des Zylinders 22 verbundene Einschubkanal erweitert sich in einer ersten Stufe 92 hinsichtlich seines Durchmessers und in axialem Abstand davon nochmals in einer zweiten Stufe 94, um nach einer dritten Stufe 96, in der sich der Durchmesser vermindert, zu enden. Der Bereich zwischen der ersten Stufe 92 und der zweiten Stufe 94 ist mit einem Innendurchmesser ausgebildet, der etwa dem Außendurchmesser des Rohrs 90 entspricht. Gemäß Figuren 6 und 7 von links her ist in den Einschubkanal 88 ein insgesamt zylindrisches Verriegelungselement 98 eingeschoben, das einen dem Außendurchmesser des Rohr entsprechenden Innendurchmesser aufweist und mit einem vorderen Endbereich 100 in einen Ringraum zwischen der zweiten Stufe 94 und der dritten Stufe 96 einragt und die dritte Stufe 96 hintergreift. An seiner Außenseite weist das beispielsweise aus Kunststoff bestehende Verriegelungselement 98 in Umfangsrichtung voneinander entfernt, beispielsweise um je 180° versetzte Finger 102 auf, die unter elastischer Aufweitung auf die leicht konisch ausgebildete Außenfläche des Ansatzes 86 aufschiebbar sind und eine Ringrippe 104 des Ansatzes 86 formschlüssig hintergreifen. Vor dem Aufschieben des Verriegelungselements 98 auf dem Ansatz 86 wird in dem Ringraum zwischen den Stufen 94 und 96 wenigstens ein Dichtring 106 angeordnet.

Die Einwärtsbewegung des Verriegelungselements 98 relativ zu dem Ansatz 86 (gemäß den Figuren nach rechts) ist durch die Anlage des vorderen Endes des Ansatzes 86 an dem Verriegelungselement 98 innerhalb der Finger 102 begrenzt, so dass gewährleistet ist, dass der Dichtring 106 beim Einschieben des Verriegelungselements 98 nicht gewaltsam verformt wird.

An seinem gemäß den Figuren linken Endbereich 109 ist das Verriegelungselement durch abgestufte Ausbildung mit einem Ringraum 108 ausgebildet, der gemäß den Figuren rechtsseitig eine Anschlagfläche 110 für einen an dem Rohr 90 ausgebildeten Anschlag 112 bildet. An seinem linksseitigen Ende umgreift der Ringraum 108 den Anschlag 112 formschlüssig.

Von links her ist auf das Verriegelungselement 98 eine Verriegelungshülse 114 aufgesetzt, die Finger 116 aufweist, die bei entsprechender Drehstellung der Verriegelungshülse 114 die Finger 102 des Verriegelungselements 98 übergreifen und in Anlage an der Außenfläche des Ansatze 86 halten. Die Verriegelungshülse 114 wirkt über entsprechende Schrägflächen mit dem Verriegelungselement 98 bajonettartig zusammen.

Der Zusammenbau der beschriebenen Anordnung ist wie folgt:
In den Einschubkanal 88 wird das Dichtelement 84 eingeschoben. Anschließend wird das Verriegelungselement 98 eingeschoben und die Verriegelungshülse 114 auf das Verriegelungselement 98 aufgeschoben, wobei ein Aufschieben beispielsweise in einer Drehstellung möglich ist und das Verriegeln zwischen Verriegelungshülse 114 und Verriegelungselement 98 nach Verdrehen der Verriegelungshülse 114 um 90° erfolgt. Die Baugruppe Dichtelement 106, Verriegelungselement 98 und Verriegelungshülse 114 ist somit an dem Zylinder 22 vormontierbar. Zur Verbindung mit der Hydraulikmittelleitung wird das Rohr 90 von links her durch die Verriegelungshülse 114 und das Verriegelungselement 98 in den Einschubkanal 88 eingeschoben, bis der einteilig mit dem Rohr 90 ausgebildete Anschlag 108 nach leichter elastischer Aufweitung des Endbereichs 109 des Verriegelungselements 98 in Anlage an die Anschlagfläche 110 kommt. Die gemäß den Figuren rechte Stirnfläche des Rohrs 90 befindet sich dann im Abstand von der Stufe 92 und das Dichtelement 106 dichtet zuverlässig zwischen dem Rohr 90 und dem Ansatz 86 ab. Anschließend wird die Verriegelungshülse 114 verdreht, so dass sie den Endbereich 109 des Verriegelungselements 98 in formschlüssigen Eingriff mit dem Angriff 112 drückt und ihre Finger 116 die Finger 102 in formschlüssiger Anlage an die Außenflächen des Ansatzes 86 drücken. Das Rohr 90 ist auf diese Weise zuverlässig und dicht am Ansatz 86 befestigt.

Es versteht sich, dass die beschriebene Anordnung in vielfältiger Weise abgeändert werden kann. Beispielsweise ist der Anschlag 112 des Rohrs 90 nicht zwingend, wenn das Rohr 90 nur in reibschlüssigem Eingriff gehalten werden soll. Mit den beschriebenen Hinterschneidungen wird jedoch ein besonders sicherer Formschluss zwischen den einzelnen Teilen erreicht, die das Rohr 90 axial am Zylinder 22 festlegen.

Eine besonders einfache Ausbildung des Anschlags 112 des Rohrs 90 ist in Figur 8 dargestellt. Gemäß der Fig. 8 kann der Anschlag 112 einfach dadurch gebildet sein, dass das Rohr 90 axial gestaucht wird und eine radiale Auswölbung entsteht. Auf diese Weise kann als Hydraulikmittelleitung bzw. Rohr 90 kostengünstige Meterware verwendet werden.

## Patentansprüche

1. Hydraulisches Betätigungssystem, insbesondere zur Betätigung einer Fahrzeugkupplung, enthaltend eine Geberzylindereinheit (10), eine Nehmerzylindereinheit (12), eine die beiden Zylindereinheiten verbindende Hydraulikmittelleitung (14) und ein Drosselventil (26; 60), mittels dessen der Strömungswiderstand zwischen den Zylindern der Geberzylindereinheit und der Nehmerzylindereinheit veränderbar ist, wobei das Drosselventil (26) von einem Aktor (40, 44) betätigt wird, der von einem Steuergerät (46) gesteuert wird, das mit einem Sensor (48) verbunden ist, der die Bewegung eines Kolbens (24) in wenigstens einer der beiden Zylindereinheiten (10) erfasst und das Steuergerät den Aktor in Richtung einer Verkleinerung des Durchströmquerschnitts ansteuert, wenn die Kolbengeschwindigkeit bei sich schließender Kupplung ein vorbestimmtes Maß übersteigt, **dadurch gekennzeichnet, dass** das Steuergerät (46) einen Aktor (54) zum Einstellen der Leistung einer Brennkraftmaschine des Kraftfahrzeugs in Richtung einer Leistungsvergrößerung ansteuert, wenn der Kolben (24) eine vorbestimmte Stellung erreicht und/oder die Kolbengeschwindigkeit bei sich schließender Kupplung ein vorbestimmtes Maß übersteigt.

2. Betätigungssystem nach Anspruch 1, wobei das Steuergerät (46) mit Sensoren (50, 52) zur Erfassung einer Drehzahl eines Fahrzeugrades und/oder einer Getriebeübersetzung verbunden ist.

3. Betätigungssystem nach Anspruch 1, wobei ein Ventilglied (72) des Drosselventils (60) verschiebbar in einer Bohrung (66) angeordnet ist, die etwa rechtwinklig zu einer zum Arbeitsraum (62) einer der Zylindereinheiten führenden Verbindungsbohrung (64) verläuft und derart ausgebildet ist und mit Wänden der Bohrung derart zusammenwirkt, dass es von einer Hydraulikmittelströmung zwischen den beiden Zylindereinheiten in die eine oder die andere Richtung gegen einen Anschlag bewegt wird, wobei bei an dem Anschlag (70) anliegenden Ventilglied ein von ihm freigegebener Strömungsquerschnitt verkleinert ist.

4. Betätigungssystem nach Anspruch 3, wobei das Ventilglied (72) insgesamt rohrförmig mit einem axialen Durchgangskanal (78) ausgebildet und derart beweglich angeordnet ist, dass aus dem zugehörigen Arbeitsraum (62) heraus strömendes Hydraulikmittel durch den Durchgangskanal hindurch strömt und in den zugehörigen Arbeitsraum hinein strömendes Hydraulikmittel das Ventilglied mit einer Stirnfläche (80) in Anlage an eine die Bohrung (66) verschließende Wand (70) bewegt, so dass der Durchgangskanal zumindest teilweise verschlossen ist und die Hydraulikmittelströmung durch einen radialen Durchlass (82; 84) in der Wand des Durchgangskanals erfolgt.

5. Betätigungssystem nach Anspruch 3 , wobei die das Ventilglied (72) aufnehmende Bohrung (66) im Gehäuse der zugehörigen Zylindereinheit (22) ausgebildet ist und die Druckmittelleitung (14) an die Bohrung angeschlossen ist.

6. Betätigungssystem nach Anspruch 3, wobei das Drosselventil (60) der Geberzylindereinheit (10) eines hydraulischen Kupplungsbetätigungssystems eines Kraftfahrzeugs zugeordnet ist und bei einer in den Geberzylinder hinein erfolgenden Hydraulikmittelströmung den Strömungsquerschnitt vermindert.

## Claims

1. Hydraulic actuation system, in particular for actuating a vehicle clutch, comprising a master cylinder unit (10), a slave cylinder unit (12), a hydraulic medium line (14) which connects the two cylinder units, and a throttle valve (26; 60) by means of which the flow resistance between the cylinders of the master cylinder unit and of the slave cylinder unit can be varied, with the throttle valve (26) being actuated by an actuator (40, 44) which is controlled by a control unit (46) which is connected to a sensor (48) which measures the movement of a piston (24) in at least one of the two cylinder units (10), and with the control unit activating the actuator in the direction of a reduction in the throughflow cross section if the piston speed exceeds a predetermined value as the clutch is closing, **characterized in that** the control unit (46) activates an actuator (54) in order to adjust the power of an internal combustion engine of the motor vehicle in the direction of a power increase when the piston (24) reaches a predetermined position and/or if the piston speed exceeds a predetermined value as the clutch is closing.

2. Actuation system according to Claim 1, with the control unit (46) being connected to sensors (50, 52) for measuring a rotational speed of a vehicle wheel and/or for detecting a transmission ratio.

3. Actuation system according to Claim 1, with a valve element (72) of the throttle valve (60) being arranged in a movable manner in a bore (66) which runs approximately at right angles to a connecting bore (64) which leads to the working chamber (62) of one of the cylinder units, and being designed and interacting with walls of the bore in such a way as to be moved in the one or other direction against a stop by a hydraulic medium flow between the two cylinder units, wherein, when the valve element bears against the stop (70), a flow cross section which is opened up by said valve element is reduced in size.

4. Actuation system according to Claim 3, with the valve element (72) being of tubular overall design with an axial passage duct (78) and being arranged in a movable fashion in such a way that hydraulic medium flowing out of the associated working chamber (62) flows through the passage duct and hydraulic medium flowing into the associated working chamber moves the valve element such that the latter abuts with an end surface (80) against a wall (70) which closes off the bore (66), such that the passage duct is at least partially closed off and the hydraulic medium flow takes place through a radial aperture (82; 84) in the wall of the passage duct.

5. Actuation system according to Claim 3, with the bore (66) which holds the valve element (72) being formed in the housing of the associated cylinder unit (22), and with the pressure medium line (14) being connected to the bore.

6. Actuation system according to Claim 3, with the throttle valve (60) being assigned to the master cylinder unit (10) of a hydraulic clutch actuation system of a motor vehicle and reducing the flow cross section in the event of a flow of hydraulic medium into the master cylinder.

## Revendications

1. Système d'actionnement hydraulique, notamment pour l'actionnement d'un embrayage de véhicule, contenant une unité de maître-cylindre (10), une unité de cylindre récepteur (12), une conduite de fluide hydraulique (14) reliant les deux unités de cylindre, et une soupape d'étranglement (26 ; 60), au moyen de laquelle la résistance d'écoulement entre les cylindres de l'unité de maître-cylindre et de l'unité de cylindre récepteur peut être modifiée, la soupape d'étranglement (26) étant actionnée par un actionneur (40, 44) qui est commandé par un appareil de commande (46), qui est connecté à un capteur (48), qui détecte le mouvement d'un piston (24) dans au moins l'une des deux unités de cylindre (10) et l'appareil de commande commandant l'actionneur dans le sens d'une réduction de la section transversale d'écoulement, lorsque la vitesse du piston dépasse une valeur prédéterminée lorsque l'embrayage se ferme, **caractérisé en ce que** l'appareil de commande (46) commande un actionneur (54) pour ajuster la puissance d'un moteur à combustion interne du véhicule automobile dans le sens d'une augmentation de la puissance, lorsque le piston (24) atteint une position prédéterminée et/ou que la vitesse du piston dépasse une valeur prédéterminée lorsque l'embrayage se ferme.

2. Système d'actionnement selon la revendication 1, dans lequel l'appareil de commande (46) est connecté à des capteurs (50, 52) pour détecter une vitesse de rotation de la roue d'un véhicule et/ou un rapport de transmission de la boîte de vitesses.

3. Système d'actionnement selon la revendication 1, dans lequel un organe de soupape (72) de la soupape d'étranglement (60) est disposé de manière déplaçable dans un alésage (66), qui s'étend approximativement à angle droit par rapport à l'espace de travail (62) d'un alésage de connexion (64) guidant les unités de cylindre, et qui est réalisé et coopère avec des parois de l'alésage de telle sorte qu'il soit déplacé par un écoulement de fluide hydraulique entre les deux unités de cylindre dans l'une ou l'autre direction contre une butée, une section transversale d'écoulement libérée par l'organe de soupape étant réduite lorsque l'organe de soupape s'applique contre la butée (70).

4. Système d'actionnement selon la revendication 3, dans lequel l'organe de soupape (72) est réalisé dans l'ensemble sous forme tubulaire avec un canal de passage axial (78) et est disposé de manière déplaçable de telle sorte que du fluide hydraulique sortant de l'espace de travail associé (62) s'écoule à travers le canal de passage et que du fluide hydraulique s'écoulant dans l'espace de travail associé déplace l'organe de soupape avec une surface frontale (80) en appui contre une paroi (70) fermant l'alésage (66), de sorte que le canal de passage soit au moins en partie fermé et que l'écoulement de fluide hydraulique s'effectue à travers un passage radial (82; 84) dans la paroi du canal de passage.

5. Système d'actionnement selon la revendication 3, dans lequel l'alésage (66) recevant l'organe de soupape (72) est réalisé dans le boîtier de l'unité de cylindre associée (22) et la conduite de fluide sous pression (14) est raccordée à l'alésage.

6. Système d'actionnement selon la revendication 3, dans lequel la soupape d'étranglement (60) est associée à l'unité de maître-cylindre (10) d'un système d'actionnement d'embrayage hydraulique d'un véhicule automobile et réduit la section transversale d'écoulement dans le cas d'un écoulement de fluide hydraulique dans le maître-cylindre.
